# EUROPEAN PATENT APPLICATION

(11) **EP 3 603 365 A1**
(43) Date of publication of application: **05.02.2020**
(21) Application number: 19180958.1
(22) Date of filing: 18.06.2019
(51) Int. Cl.: A01B 33/16, E01C 23/088

(54) **SELF-PROPELLED VEHICLE FOR GRINDING GROUND**

(30) Priority: 03.08.2018 IT 201800007858
(71) Applicant: Fraron S.r.l., 36026 Pojana Maggiore (VI) (IT)
(72) Inventor: Fraron, Lino, 36040 Sossano (Vicenza) (IT)
(74) Representative: Ponchiroli, Simone

(57) **Abstract**

A self-propelled vehicle for grinding ground, comprising a supporting carriage (2) equipped with wheels and/or tracks (3), a milling machine (5) supported by the supporting carriage (2) and comprising a rotatable drum (8) equipped with a plurality of grinding heads (9) which are distributed on its outer surface, at least one motor (11), a containment housing (12) which partly surrounds the milling machine (5) which projects below the containment housing (12), a plurality of first nozzles (25) mounted in the containment housing (12) and facing the milling machine (5), a chilled water feeding device (26) connected to at least several of the first nozzles (25), a nitrogen feeding device (27), and a plurality of second nozzles (28) connected to the nitrogen feeding device (27) and positioned in such a way as to supply nitrogen between the containment housing (12) and the milling machine (5).

## Description

This invention relates to a self-propelled vehicle for grinding ground, and more precisely a self-propelled vehicle for grinding stony and rocky ground, for the purpose of making it usable for agriculture.

Converting stony and rocky ground into fertile ground, usable for agriculture, is a goal that has been pursued for centuries.

In the distant past it could only be done manually by removing, one by one, the stones which could hinder cultivation.

Subsequently, with the advent of agricultural machinery, first we saw the development of various equipment able to mechanically remove stones and then of equipment capable of grinding medium-sized stones and rocks. In particular, various equipment was developed which could be operated using the power take-offs of tractors. In general, these are milling machines constituted of a motor-driven drum, which rotates inside a containment housing, from the bottom of which it projects, and whose surface is equipped with a plurality of grinding heads.

Another sector in which for some time now there has been a need for grinding ground is that of resurfacing roads after removing the existing paving. For this sector various types of specific self-propelled vehicles have been developed, in which the milling machine is an integral part of the vehicle.

Despite being a technology which is in itself known, both the accessory equipment for tractors, and the self-propelled vehicles developed up to now, are capable of grinding only relatively soft ground, such as road paving or earths containing both soil and stones.

In contrast, both the equipment and the vehicles currently for sale are not usable for grinding ground which is rocky (that is to say, not constituted of stones mixed with soil, but of extensive rocky formations) or extremely stony (large stones or complete or almost complete absence of soil). In fact, at least, the equipment and vehicles currently for sale are not capable of doing it in acceptable times and with reasonable operating costs.

Indeed, the harder and more compact the earth is, the more time is required for grinding it and, above all, the higher the operating costs linked in particular to wear of the grinding heads.

In fact, usually, the grinding heads are made of metal alloys with high mechanical resistance and comprise a fixed part fixed to the rotary drum of the milling machine, and an operating part which is joined to the fixed part and which can easily be substituted once worn. If the material to be ground up is particularly hard or compact, the operating parts of the heads tend to wear very quickly, until the grinding operations basically become uneconomical.

A further problem which may arise with prior art milling machines, is the risk that the high temperatures which may be reached due to the friction between the milling machine and the ground, cause self-combustion of any combustible materials which are present inside the milling machine and, consequently, the development of bursts of flame or even explosions.

In this context, the technical purpose which forms the basis of this invention is to provide a self-propelled vehicle for grinding ground which overcomes the above-mentioned disadvantages.

In particular, the technical purpose of this invention is to provide a self-propelled vehicle for grinding ground, which allows grinding with good efficiency and with reasonable working times, even of rocky or extremely stony earths.

A further technical purpose of this invention is to provide a self-propelled vehicle for grinding ground, which minimises the risk of explosions or bursts of flame.

The technical purpose specified and the aims indicated are substantially achieved by a self-propelled vehicle for grinding ground as described in the appended claims.

Further features and the advantages of this invention are more apparent in the detailed description below, with reference to several preferred, nonlimiting embodiments of a self-propelled vehicle for grinding ground, illustrated in the accompanying drawings, in which:
- Figure 1 is a schematic side view of a self-propelled vehicle made in accordance with this invention;
- Figure 2 is a front view of a milling machine usable with the self-propelled vehicle of Figure 1;
- Figure 3 is a schematic side view without background elements, of a milling machine usable in a vehicle made in accordance with this invention;
- Figure 4 is a schematic side view of a portion of a milling machine made in accordance with a further innovative aspect of this invention;
- Figure 5 is a schematic side view of several components of the self-propelled vehicle which is the subject matter of this invention; and
- Figure 6 is a bottom view of an inner containment wall visible in Figure 5.

With reference to the above-mentioned figures, the numeral 1 denotes in its entirety a self-propelled vehicle made according to this invention. It should be noticed that, irrespective of the content of the claims appended to this patent application, the Applicant as of now reserves the right to file any patent applications claiming the priority of this, or divisional applications, which even have as their subject matter only one of the innovative aspects described below. In fact, each innovative aspect of the self-propelled vehicle 1, described below shall be understood as a possible subject of independent protection even not in combination with the other innovative aspects described.

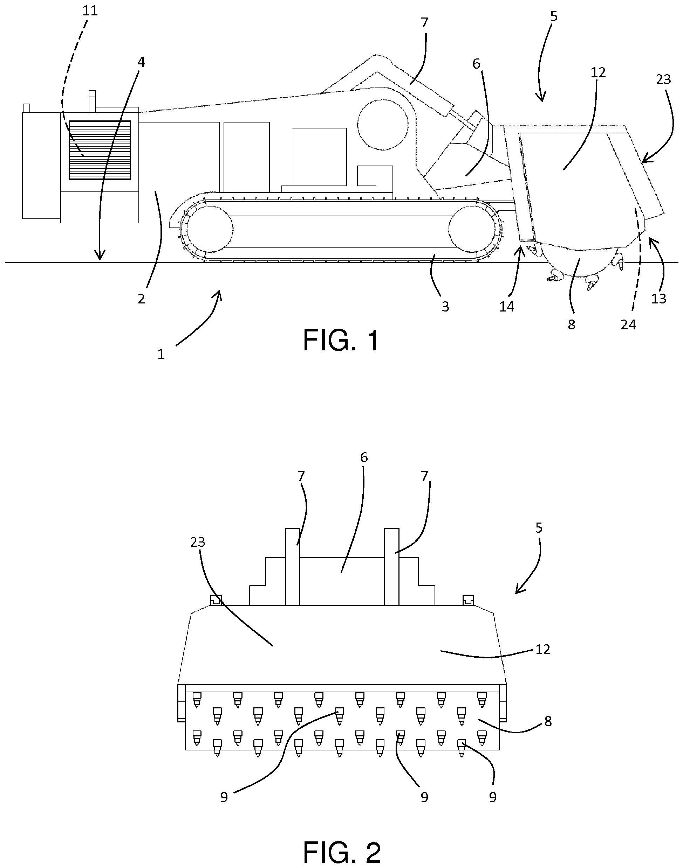

As shown in Figure 1, the self-propelled vehicle 1 comprises first a supporting carriage 2 which may be equipped with wheels and/or tracks 3. The bottoms of the wheels and/or tracks 3 with which the supporting carriage 2 is equipped define a resting plane 4 for the supporting carriage 2 on the earth, a resting plane 4 which is horizontal in the case of flat earth.

Moreover, as for any vehicle, the wheels and/or tracks 3 identify the straight line of travel of the supporting carriage 2 on the earth (line parallel to the longitudinal line of extension of the self-propelled vehicle 1).

At the front, the supporting carriage 2 supports cantilever-style a milling machine 5 suitable for grinding the ground. In particular, in the embodiment illustrated the milling machine 5 is supported by a supporting arm 6 hinged to the supporting carriage 2, and by two hydraulic actuators 7 suitable for positioning the milling machine 5 in the desired operating position, by making the supporting arm 6 rotate. In fact, during the operations for grinding the ground, the milling machine 5 must be positioned in such a way that it projects below the resting plane 4 defined by the wheels and/or tracks 3, by a height equal to the depth to which the earth is to be worked (Figure 1 - in the preferred embodiment the milling machine 5 is able to project by at least 50 cm, preferably by at least 60 cm, below the resting plane 4). Obviously, the connection of the milling machine 5 to the supporting arm 6, and its movement relative to the latter, may even be obtained with any other technical solution suitable for the purpose.

In other embodiments not illustrated it is even possible for the milling machine 5 to be positioned at the rear of the supporting carriage 2, as well as at an intermediate portion of it (in that case it will not be supported cantilever-style).

The milling machine 5 also comprises a drum 8 (advantageously having a cylindrical section), equipped with a plurality of grinding heads 9 which are evenly distributed on its outer surface. The drum 8 is also rotatable about its own central axis 10, which is positioned perpendicular to the straight line of travel of the self-propelled vehicle 1 and parallel to the resting plane 4 (in other words the central axis 10 is horizontal and transversal when the ground on which the vehicle rests is flat).

Mounted on the supporting carriage 2 there is at least one motor 11 (there may be more than one for the various functionalities of the vehicle) which is connected both to the drum 8 of the milling machine 5, for driving its rotation about the central axis 10, and to the wheels and/or to the tracks 3, for driving them and therefore making the supporting carriage 2 advance on the earth.

In the known way, a containment housing 12 also partly surrounds the milling machine 5. That containment housing 12 is closed at the side and at the top, whilst it is open at the bottom for allowing the milling machine 5 to project downward. Advantageously, the lower middle of the containment housing 12 is also equipped with a lifting system relative to the milling machine 5, both at the front and at the rear. That lifting system allow varying of the lower projection of the milling machine 5 relative to the containment housing, allowing both varying of the working depth, and varying of the material outfeed time. In fact, by varying the distance from the earth of the front edge 13 and of the rear edge 14 of the lower opening in the containment housing 12 (it should be noticed that the terms front and rear relate to the line of advancing of the self-propelled vehicle 1 during operation) it is possible to act on the time for which the material remains in contact with the milling machine 5 and, therefore, on the particle size measurement which can be obtained.

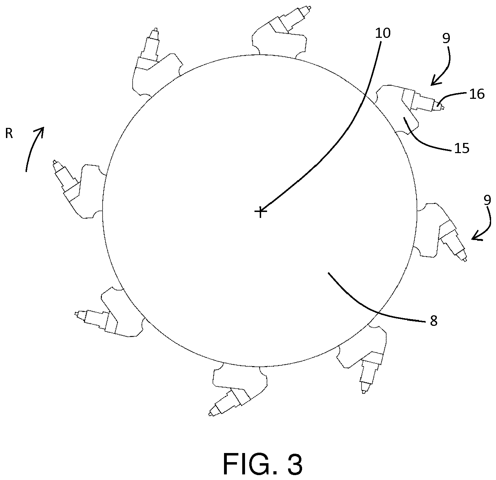

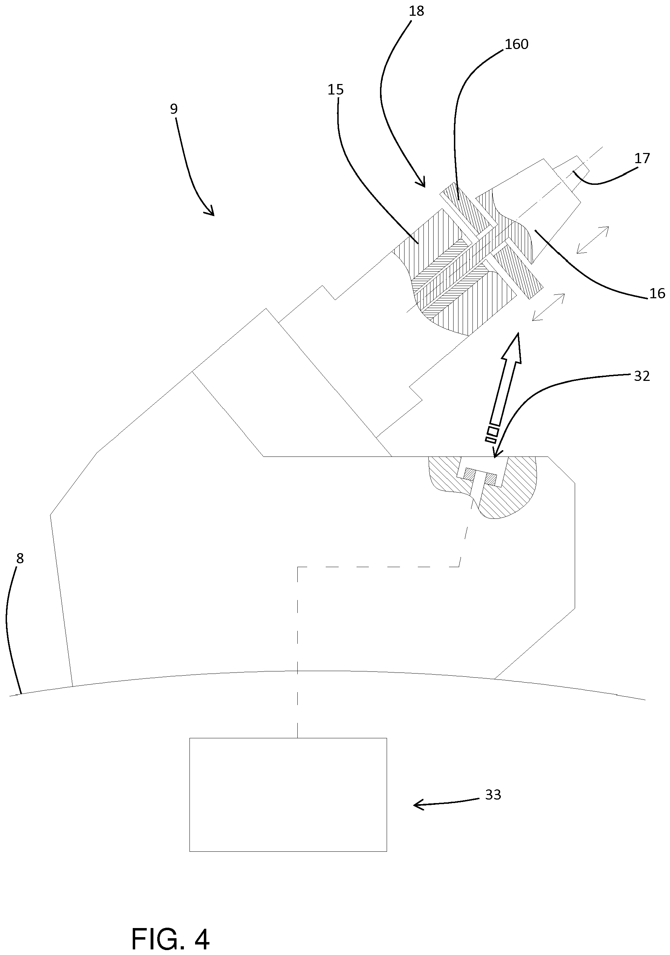

Advantageously, each grinding head 9 of the milling machine 5 comprises a supporting part 15, connected to the drum 8, and an operating part 16 which is removably joined to the supporting part 15 in such a way that it is also free to rotate about its own axis of rotation 17 (Figures 3 and 4). Moreover, in the embodiment illustrated, the operating part 16 of each grinding head 9 has a main axis of extension which coincides with the relative axis of rotation 17, and which is sloping forward relative to a direction of rotation of the milling machine 5 (indicated by the arrow R in Figure 3) so that, during the rotation, the tip of the operating part 16 is always angularly further forward than the coupling zone 18 between the supporting part 15 and the operating part 16. The inclination of the central axis 10 is understood relative to a line coming out of the central axis 10 which lies in the same plane radial to the central axis 10, of the milling machine 5 in which the main axis of extension lies. In the preferred embodiment, interposed between the movable operating part 16 and the supporting part 15 there is a washer 160 which is in turn free to rotate about the axis of rotation 17 both relative to the supporting part 15, and relative to the operating part 16. Moreover, as is explained in more detail below, both the operating part 16 and the washer 160 are able to perform oscillations along the axis of rotation 17 relative to the supporting part 15.

In use, the grinding action is guaranteed both by the impact of the grinding heads 9 on the ground, and by the combined action of the self-same grinding heads 9 and of the containment housing 12, which has an inner containment wall 19 which is facing the milling machine 5 and which acts as a fixed contact element for the action of the grinding heads 9. Advantageously, the inner containment wall 19 has an upper portion 20 in the shape of a half-cylinder (with circular or polygonal section) and coaxial with the central axis 10 of the drum 8, to which there are connected a front flat wall 21 and a rear flat wall 22, whose bottoms respectively define part of the front edge 13 and part of the rear edge 14 of the containment housing 12.

Advantageously, the containment housing 12 may also comprise an outer wall 23, and a hollow space 24 between the inner containment wall 19 and the outer wall 23 (the hollow space 24 may house part of the hydraulic/pneumatic circuits described below).

With reference to a first innovative aspect of this invention, the self-propelled vehicle 1 comprises a plurality of first nozzles 25 mounted in the containment housing 12 and facing the milling machine 5, and a chilled water feeding device 26 connected to the first nozzles 25. According to this innovative aspect, during operation the milling machine 5 is constantly sprayed with chilled water in such a way as to keep the temperature of the operating parts of the grinding heads 9 relatively low, thereby ensuring that they last longer than in conventional milling machines. Moreover, in the preferred embodiment, the first nozzles 25 are nebulising nozzles for improving the efficiency of heat exchange between the water and the grinding heads 9.

According to a second innovative aspect of this invention, the self-propelled vehicle 1 comprises a nitrogen feeding device 27, and a plurality of second nozzles 28, which are connected to the nitrogen feeding device 27 and positioned in such away as to supply nitrogen between the containment housing 12 and the milling machine 5. According to this innovative aspect, by constantly feeding nitrogen between the containment housing 12 and the milling machine 5, thanks to the lower specific weight of nitrogen compared with oxygen, it is possible to create inside the containment housing 12, a protective atmosphere with reduced oxygen content, and thereby to eliminate the risk of bursts of flame or accidental explosions (the risk is further reduced if the spraying with chilled water is also provided). Depending on the embodiments, the second nozzles 28 may be fixed either to the containment housing 12, or to the rotary drum 8 (the latter solution is particularly advantageous if a solution according to the third innovative aspect described below is adopted).

According to the second innovative aspect, it is also preferable for the containment housing 12 to be made in such a way that is prevents or at least hinders the upward emission of nitrogen.

In the preferred embodiment, illustrated in the accompanying figures, at least several of the second nozzles 28 are constituted of first nozzles 25 and the self-propelled vehicle 1 comprises both the chilled water feeding device 26, and the nitrogen feeding device 27. In this case, at least several of the first nozzles 25, advantageously all of them, are simultaneously connected both to the chilled water feeding device 26, and to the nitrogen feeding device 27, for being fed with a mixture of chilled water and nitrogen.

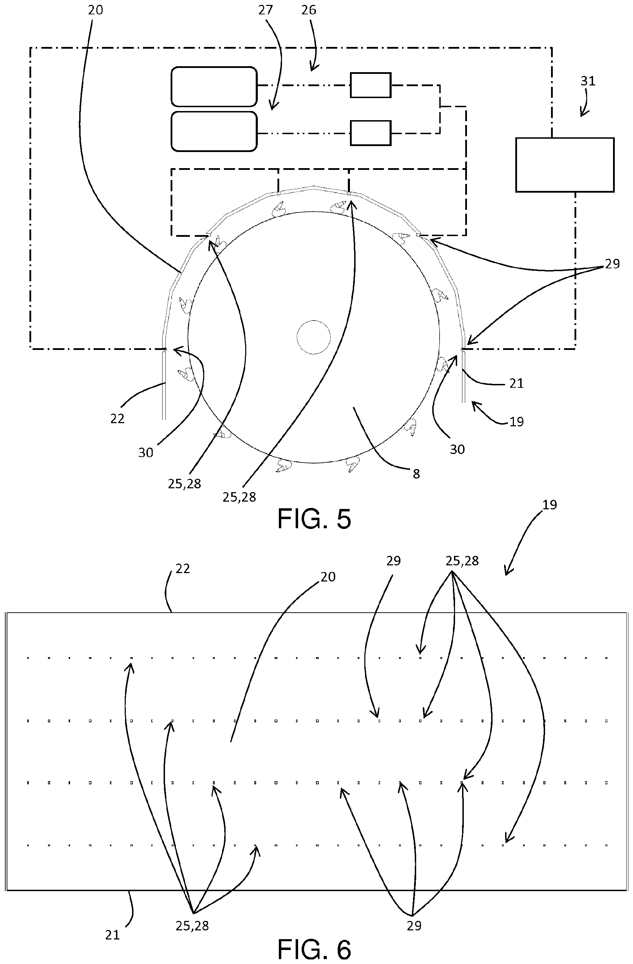

When the first nozzles 25 and the second nozzles 28 are joined to the containment housing 12, they are advantageously distributed in an upper portion 20 of the containment housing 12, and are facing an upper part of the milling machine 5 (see Figure 6). Moreover, advantageously, at each nozzles 25, 28 joined to it, the inner containment wall 19 has a recess 29, which extends away from the milling machine 5, and in which the nozzle 25, 28 is mounted in such a way as to be protected from the material which during use moves with a whirling motion between the containment housing 12 and the milling machine 5.

Depending on the embodiments, all or several of the second nozzles 28 may be joined to the drum 8 rather than to the containment housing 12. In particular several second nozzles 28 may be joined to the drum 8 when in the vehicle the third innovative aspect described below is also adopted and, also in relation to that, nitrogen is used.

The chilled water feeding device 26 comprises first a water source which may be constituted of at least one first tank or of a connection for connecting to a water supply network. Whilst the former solution is certainly preferable in the case of limited water consumption and absence of water supply networks, the latter solution may be advantageous where the earth to be treated is already equipped with a water supply network for irrigation.

The water feeding device also comprises a first feeding pipe connected between the water source and the first nozzles 25, if necessary a pump joined to the first pipe for pumping water from the water source to the first nozzles 25 (unless flow rate and pressure necessary are guaranteed by an external water supply network), and a refrigerating unit (such as a chiller) mounted along the first pipe and suitable for chilling the water, advantageously bringing it to a temperature close to 0°C (advantageously the water temperature will be kept in the range 2°C ± 2°C).

The nitrogen feeding device 27 comprises a nitrogen source and a second pipe connected between the nitrogen source and the second nozzles 28. Depending on requirements, the nitrogen source may be constituted either of a second tank suitable for containing liquid nitrogen, or of a nitrogen generator suitable for extracting nitrogen from the ambient air.

Depending on the embodiments, if due to the whirling motion created in the space between the containment housing 12 and the milling machine 5, it is difficult to contain the nitrogen between the containment housing 12 and the milling machine 5, in a variant of the second innovative aspect of this invention, at least part of the second nozzles 28 for the nitrogen are joined to the containment housing 12, and the self-propelled vehicle 1 is also equipped with a plurality of third nozzles 30 which are also mounted in the containment housing 12, and with a device 31 for feeding a further inert gas, having a specific weight lower than that of nitrogen (in particular, use of helium is provided for), connected to the third nozzles 30 (Figure 5). The third nozzles 30 are in particular positioned at a height lower than the second nozzles 28 joined to the containment housing 12, are also facing the milling machine 5 and are distributed in the containment housing 12 along the whole axial extent of the along the whole axial extent of the milling machine 5 (similarly to what is shown in Figure 6 for the first nozzles 25), on both sides of the milling machine 5 in such a way as to attempt to always keep a layer of the inert gas below the layer of nitrogen.

The third nozzles 30 are also advantageously mounted in recesses 29 made in the inner containment wall 19.

The third innovative aspect of this invention, illustrated in Figure 4, is applied in the case in which at least several grinding heads 9 comprise the supporting part 15 and the rotatable operating part 16. With the aim of attempting to keep the coupling zone 18 between the two as clean as possible, and therefore attempting to guarantee free rotation of the operating part 16 (the possibility of rotating guarantees the operating part 16 significantly less wear, the impacts on the rocky material being equal), joined to each grinding head 9 there is a least one pneumatic nozzle 32 positioned in such a way as to be facing the coupling zone 18 (which also means that the pneumatic nozzle 32 may be positioned directly in the coupling zone 18). Advantageously the nozzle 32 is positioned recessed relative to the rest of the grinding head 9 so that it is more protected from the material which in use is being worked in the milling machine. The self-propelled vehicle 1 also comprises a device 33 for feeding a high pressure gaseous fluid (advantageously meaning at a pressure greater than or equal to 14 bar) to each pneumatic nozzle 32, and each pneumatic nozzle 32, in use, directs the high pressure gaseous fluid towards the coupling zone 18. In the preferred embodiment each pneumatic nozzle 32 has a transit opening with a diameter of between 1 and 2 mm.

In the preferred embodiment in which, at the coupling zone, the washer 160 is present, the pneumatic nozzle 32 is advantageously positioned in such a way that the high pressure gaseous flow, supplied from it, strikes the side of the washer 160 facing the supporting part 15, generating on it a thrust away from the supporting part 15. The thrust must also be strong enough to move the washer 160 and the operating part 16 away from the supporting part 15 in the absence of other stresses. In contrast, during operation, the operating part 16 and the washer 160 will perform a plurality of oscillations relative to the axis of rotation 17, caused by the alternating action of the gaseous flow (coming out of the grinding head 9) and the mechanical action applied on the ground and on the material present in the milling machine (going inward relative to the grinding head 9).

Furthermore, in the preferred embodiment, on its side facing the supporting part 15, the washer 160 is advantageously shaped in such a way as to define a sort of blading which, under the action of the pressurised gaseous fluid, is suitable for making the washer 160 rotate about the axis of rotation. Therefore, with each oscillation relative to the axis of rotation 17, the washer 160 also performs a rotation about the axis of rotation 17.

Moreover, in the preferred embodiment, the high pressure gaseous fluid is constituted of nitrogen. Therefore, if the self-propelled vehicle 1 adopts both the second and the third innovative aspects of this invention, the nitrogen feeding device 27 and the device 33 for feeding a gaseous fluid may coincide.

Moreover, if the self-propelled vehicle 1 adopts both the second and third innovative aspects of this invention, the pneumatic nozzles 32 also constitute second nozzles 28 and help to create the atmosphere with reduced oxygen content inside the containment housing 12.

Finally, it should be noticed that the chilled water feeding device 26, the nitrogen feeding device 27, the device 31 for feeding a further inert gas and the device 33 for feeding a pressurised gaseous fluid may be powered with the power generated by the motor 11 of the self-propelled vehicle 1.

Furthermore, according to a fourth innovative aspect of this invention, the self-propelled vehicle 1 is preferably radio-controlled and may be guided from a distance by the user who, therefore, can carry out the work without being subjected to the exhausting vibrations which are generated during grinding of the earth.

Finally, according to a fifth innovative aspect of this invention the vehicle may be equipped with a further wireless data communication interface (for example of the Wi-Fi or telephone type) which allows its connection to existing data networks with the aim of allowing remote monitoring or even guiding of the self-propelled vehicle 1.

Operation of the self-propelled vehicle 1 according to this invention is similar to that of any prior art equipment in terms of the mechanical action for grinding the ground, whilst the operating details relating to the various innovative aspects have already been clarified in the above description.

This invention brings important advantages.

In fact, first, thanks to the first innovative aspect, the self-propelled vehicle allows the grinding of earths which are even rocky or extremely stony with an efficiency and with working times which are more favourable than those of prior art equipment.

Second, thanks to the second innovative aspect described, it has been possible to provide a self-propelled vehicle for grinding ground which minimises the risk of explosions or bursts of flame.

Furthermore, thanks to the third innovative aspect it has been possible to minimise the risk that the rotatable operating portions of the grinding heads may seize up due to the dirt which may work its way into them, significantly increasing their useful life.

Finally, it should be noticed that this invention is relatively easy to produce and that even the cost linked to implementing the invention is not very high.

The invention described above may be modified and adapted in several ways without thereby departing from the scope of the inventive concept.

All details may be substituted with other technically equivalent elements and the materials used, as well as the shapes and dimensions of the various components, may vary according to requirements.

## Claims

1. A self-propelled vehicle for grinding ground, comprising:
a supporting carriage (2) equipped with wheels and/or tracks (3), wherein the bottoms of the wheels and/or tracks (3) define a resting plane (4) for the supporting carriage (2) on an earth, and wherein the wheels and/or tracks (3) identify a straight line of travel of the supporting carriage (2) on the earth;
a milling machine (5) supported by the supporting carriage (2), and comprising a drum (8) equipped with a plurality of grinding heads (9) which are distributed on its outer surface, the drum (8) being rotatable about its own central axis (10) which is positioned perpendicular to the straight line of travel and parallel to the resting plane (4);
at least one motor (11), mounted on the supporting carriage (2) and connected to the drum (8) of the milling machine (5) for driving its rotation about the central axis (10), and to the wheels and/or to the tracks (3) for driving them and making the supporting carriage (2) advance on the earth;
a containment housing (12) which partly surrounds the milling machine (5), wherein the containment housing (12) is open at the bottom and closed at the side and at the top, wherein the rotary milling machine (5) projects below the containment housing (12), and wherein the containment housing (12) has an inner containment wall (19) facing the milling machine (5) which constitutes a fixed contact element suitable for in use operating in conjunction with the grinding head (9);
a plurality of first nozzles (25) mounted in the containment housing (12) and facing the milling machine (5);
a chilled water feeding device (26) connected to at least several of the first nozzles (25);
a nitrogen feeding device (27); and
a plurality of second nozzles (28) connected to the nitrogen feeding device (27) and positioned in such a way as to supply nitrogen between the containment housing (12) and the milling machine (5).

2. The self-propelled vehicle according to claim 1 wherein at least several first nozzles (25) also constitute second nozzles (28) and are connected both to the chilled water feeding device (26), and to the nitrogen feeding device (27), for being fed with a mixture of chilled water and nitrogen.

3. The self-propelled vehicle according to claim 1 or 2 wherein the first nozzles (25) are nebulising nozzles.

4. The self-propelled vehicle according to any of claims 1 to 3 wherein the first nozzles (25) and/or the second nozzles (28) are distributed in an upper portion (20) of the containment housing (12) and are facing an upper part of the milling machine (5).

5. The self-propelled vehicle according to any of claims 1 to 4 wherein the chilled water feeding device (26) comprises a water source constituted of at least one first tank or of a connection for connecting to a water supply network, a first feeding pipe connected between the water source and the first nozzles (25), optionally a pump joined to the first pipe for pumping water from the water source to the first nozzles (25), and a refrigerating unit mounted along the first pipe for chilling the water.

6. The self-propelled vehicle according to any of claims 1 to 5 wherein the nitrogen feeding device (27) comprises a nitrogen source and a second pipe connected between the nitrogen source and the second nozzles (28), wherein the nitrogen source is constituted either of a second tank suitable for containing liquid nitrogen or of a nitrogen generator.

7. The self-propelled vehicle according to any of claims 1 to 6 wherein, at each nozzle joined to it, the inner containment wall (19) has a recess (29) which extends away from the milling machine (5) and in which the nozzle is mounted.

8. The self-propelled vehicle according to any of claims 1 to 7 also comprising a plurality of third nozzles (30) mounted in the containment housing (12), and a device (31) for feeding a further inert gas having a specific weight lower than that of nitrogen, connected to the third nozzles (30), wherein the third nozzles (30) are positioned at a height lower than the first nozzles (25), are facing the milling machine (5) and are distributed in the containment housing (12) along the whole axial extent of the milling machine (5) on both sides of the milling machine (5).

9. The self-propelled vehicle according to claim 8 wherein, at each third nozzle, the inner containment wall (19) has a recess which extends away from the milling machine (5) and in which the third nozzle is mounted.

10. The self-propelled vehicle according to any of claims 1 to 9 wherein each grinding head (9) comprises a supporting part (15), connected to the drum (8), and an operating part (16), joined to the supporting part (15), wherein the operating part (16) is free to rotate about its own axis of rotation (17) relative to the supporting part (15), wherein joined to each grinding head (9) there is at least one pneumatic nozzle (32) facing a coupling zone (18) between the operating part (16) and the supporting part (15), wherein the vehicle also comprises a device (33) for feeding a high pressure gaseous fluid to each pneumatic nozzle (32), and wherein each pneumatic nozzle (32), in use, directs the high pressure gaseous fluid towards the coupling zone (18).

11. The self-propelled vehicle according to claim 10 wherein the device (33) for feeding a high pressure gaseous fluid feeds nitrogen.

12. The self-propelled vehicle according to any of claims 10 to 11 wherein the operating part (16) of each grinding head (9) has a main axis of extension which coincides with the relative axis of rotation (17), which lies in a plane radial relative to the central axis (10) of the milling machine (5), and which, relative to a line coming out of the central axis (10), is sloping forward relative to a direction of rotation of the milling machine (5).

13. The self-propelled vehicle according to any of claims 1 to 12 wherein the vehicle is radio-controlled.

14. The self-propelled vehicle according to any of claims 1 to 13 wherein the milling machine (5) projects by at least 50 cm below the resting plane (4).

15. The self-propelled vehicle according to any of claims 1 to 14 also comprising a lifting system interposed between the containment housing (12) and the milling machine (5) for varying the lower projection of the milling machine (5) relative to the containment housing (12).
